# FASCICULE DE BREVET EUROPEEN

(11) **EP 4 127 265 B1**
(45) Date de publication et mention de la délivrance du brevet: **27.11.2024**
(21) Numéro de dépôt: 21716486.2
(22) Date de dépôt: 09.03.2021
(51) Int. Cl.: C23C 24/10, B23K 26/34, F02C 7/25, F01D 25/00, F01D 5/28, F01D 25/24, B23K 9/04, B23K 26/342

(54) **PROCÉDÉ DE FABRICATION D'UNE PIÈCE EN MÉTAL RÉSISTANTE AU FEU TITANE PAR FABRICATION ADDITIVE**
VERFAHREN ZUR HERSTELLUNG EINES FEUERFESTEN TITANMETALLBAUTEILS DURCH GENERATIVE FERTIGUNG
METHOD FOR MANUFACTURING A TITANIUM FIRE-RESISTANT METAL COMPONENT BY ADDITIVE MANUFACTURING

(30) Priorité: 25.03.2020 FR 2002932
(43) Date de publication de la demande: 08.02.2023
(73) Titulaire: SAFRAN AIRCRAFT ENGINES, 75015 Paris (FR)
(72) Inventeur: LEBLANC, Jonathan, 77550 MOISSY-CRAMAYEL (FR); SISTACH, Hugo Jean-Louis, 77550 MOISSY-CRAMAYEL (FR)
(74) Mandataire: Casalonga
(86) Numéro de dépôt international: PCT/FR2021/050396
(87) Numéro de publication internationale: WO 2021/191521

(56) Documents cités:
- FR-A1- 2 978 076
- FR-A1- 3 055 820
- FR-A1- 3 062 324
- US-A1- 2006 166 020
- MA WENHUA ET AL: "Microstructural and mechanical properties of high-performance Inconel 718 alloy by cold spraying", JOURNAL OF ALLOYS AND COMPOUNDS, vol. 792, 6 April 2019 (2019-04-06), pages 456 - 467, XP085681750, ISSN: 0925-8388, DOI: 10.1016/J.JALLCOM.2019.04.045
- CHEN CHAOYUE ET AL: "Microstructure evolution and mechanical properties of maraging steel 300 fabricated by cold spraying", MATERIALS SCIENCE AND ENGINEERING: A, vol. 743, 24 November 2018 (2018-11-24), pages 482 - 493, XP085576901, ISSN: 0921-5093, DOI: 10.1016/J.MSEA.2018.11.116
- MOLAK R M ET AL: "Effects of Spray Parameters and Post-spray Heat Treatment on Microstructure and Mechanical Properties of Warm-Sprayed Ti-6Al-4V Coatings", JOURNAL OF THERMAL SPRAY TECHNOLOGY, ASM INTERNATIONAL, MATERIALS PARK, US, vol. 26, no. 4, 9 December 2016 (2016-12-09), pages 627 - 647, XP036206244, ISSN: 1059-9630, [retrieved on 20161209], DOI: 10.1007/S11666-016-0494-5

## Description

### Domaine technique

La présente invention concerne, de manière générale, un procédé de fabrication de pièces en métal.

### Etat de la technique

Certaines pièces sont réalisées en alliage de titane pour les propriétés particulières de ces alliages, notamment de tenue mécanique, de tenue en température mais aussi de tenue à la corrosion pour une densité moindre que celle d'un acier ou que celle d'un autre alliage comme ceux à base de Nickel ou à base de Cobalt.

C'est notamment le cas de pièces aéronautiques, par exemple de pièces de turbomachines telles que des carters de compresseur haute pression. Dans ce cas, la pièce en titane est une coque.

Dans la description qui suit, on entend par coque une pièce dont une des trois dimensions (son épaisseur) dans l'espace est faible (au moins cinq fois plus faible) par rapport aux deux autres dimensions (sa longueur et sa largeur) perpendiculaires à cette épaisseur. Une coque englobe ainsi une plaque, un tube, une virole, un carter.

Le terme titane est utilisé ci-après pour signifier un alliage où le titane est l'élément majoritaire.

Une telle pièce, généralement utilisée dans un environnement à haute température, doit être capable de résister au feu titane, c'est-à-dire une inflammation catastrophique du titane en cas d'élévation brutale de température.

Dans le cas de carters de compresseur haute pression, le risque de feu titane est également augmenté par le frottement entre le carter et l'aubage qu'il protège, formé par un matériau à base de titane.

Diverses solutions sont actuellement employées afin d'empêcher une telle inflammation du titane. Elles consistent à fixer sur la pièce en titane une pièce en un autre alliage (c'est-à-dire un alliage autre qu'un alliage en titane), cette pièce en un autre alliage étant destinée à être exposée aux températures plus élevées et formant un écran entre ces températures élevées et la pièce en titane.

Il est notamment connu de fixer les deux pièces par colaminage à chaud, par plaquage hydraulique ou encore à l'aide de douilles.

Toutefois, ces solutions existantes présentent des inconvénients.

En effet, il est difficile de maîtriser la position exacte de l'interface entre la pièce en titane et la pièce en un autre alliage.

De plus, selon les tolérances de mise en oeuvre, des tolérances d'usinage et des stratégies d'usinage, l'épaisseur de l'une ou de l'autre partie n'est pas toujours optimisée. Par exemple, il est souvent impossible que cette interface suive la forme définitive tout au long de la pièce au plus près des côtes lorsque la géométrie de la pièce en titane est en trois dimensions.

Il est en outre impossible de maîtriser le ratio d'épaisseur entre deux matériaux (aux tolérances près).

De plus, lorsque l'un des procédés ci-dessus est utilisé, la résistance au cisaillement ou au décollement entre la pièce en titane et la pièce en un autre alliage est assez faible. Cette résistance au cisaillement est d'autant plus faible que la différence entre les coefficients de dilatation du titane et de l'autre alliage est importante.

Aussi, la complexité, le nombre d'étapes permettant de fixer la pièce en titane et la pièce en un autre alliage selon ces procédés connus et la nécessité d'usiner l'ensemble formé par les deux pièces après leur assemblage, font que le coût du procédé est élevé.

La demande de brevet FR2 978 077 décrit un procédé d'assemblage d'une première coque en un matériau résistant au feu titane et d'une deuxième coque en un matériau à base de titane.

Les deux coques sont mises au contact l'une de l'autre puis chauffées. La deuxième coque se déforme de façon à épouser la forme de la première coque.

Cependant, compte tenu des différences de dilatation entre les deux matériaux envisagés, le risque de séparation des deux pièces est important.

Les demandes de brevet FR 3 055 820 A1 et FR 2 978 076 A1 décrivent un procédé différent de fabrication d'une pièce en métal, comprenant les étapes suivantes : la fourniture d'une coque en un matériau à base de titane, la coque présentant une première surface et une deuxième surface opposée à la première surface, puis la réalisation par fabrication additive d'une couche de recouvrement en un matériau résistant au feu titane sur la coque de sorte que ladite couche de recouvrement recouvre au moins partiellement la première et/ou la seconde surface.

### Exposé de l'invention

L'invention a donc pour but de remédier à ces inconvénients et de proposer un procédé de fabrication d'une pièce en métal bénéficiant à la fois de la faible densité d'un alliage à base de titane et d'une résistance au feu titane.

Il est donc proposé un procédé de fabrication d'une pièce en métal, le procédé de fabrication comportant les étapes suivantes :
on fournit une coque en un matériau à base de titane, la coque présentant une première surface et une deuxième surface opposée à la première surface ;
on réalise par fabrication additive une couche de recouvrement en un matériau résistant au feu titane sur la coque de sorte que ladite couche de recouvrement recouvre au moins partiellement la première surface et/ou la deuxième surface ; et
après l'étape de fabrication additive, on effectue un traitement thermique de la pièce en métal à une température comprise entre 200°C et 1000°C.

Selon un mode de réalisation, la couche de recouvrement peut être en un matériau de formule NiCr19Fe19Nb5Mo3 et/ou la coque peut être en un matériau de formule Ti6Al4V.

Avantageusement, le traitement thermique peut comprendre une pluralité d'étapes.

De préférence, le traitement thermique comprend une première étape à une température comprise entre 500°C et 1000°C, de préférence comprise entre 700°C et 1000°C, de préférence encore comprise entre 930°C et 950°C.

De plus, la première étape peut être réalisée pendant une durée comprise entre 10min et 5h, de préférence comprise entre 30min et 2h, de préférence encore comprise entre 45 min et 1h30.

De préférence, le traitement thermique peut comprendre une deuxième étape à une température comprise entre 200°C et 900°C, de préférence comprise entre 500°C et 800°C et de préférence encore comprise entre 690°C et 710°C.

La deuxième étape peut être réalisée pendant une durée comprise entre 30 min et 9h, de préférence comprise entre 6h et 9h, de préférence encore comprise 7h30 et 8h30.

En outre, le procédé de fabrication peut comprendre la réalisation d'une pluralité de couches intermédiaires disposées entre la coque et la couche de recouvrement, la pluralité de couches intermédiaires étant formées par un mélange du matériau résistant au feu titane et du matériau à base de titane, ledit mélange formant un gradient de composition de sorte que la couche intermédiaire disposée directement au contact de la couche de recouvrement en matériau résistant au feu titane étant majoritairement formée par le matériau résistant au feu titane et inversement, la couche intermédiaire disposée directement au contact de la coque en matériau à base de titane étant majoritairement formée par le matériau à base de titane.

De préférence, le nombre de la pluralité de couches intermédiaires est compris entre 4 et 20 couches, de préférence compris entre 10 et 15 couches.

Avantageusement, la pluralité de couches intermédiaires peut comprendre trois couches, chacune des trois couches comprend respectivement, en partant de la coque vers la couche de recouvrement, une proportion en matériau résistant au feu titane/matériau à base de titane de : 30%/70%, 50%/50% et 70%/30%.

Selon un autre mode de réalisation, la pluralité de couches intermédiaires peut comprendre trois couches, chacune des trois couches comprend respectivement, en partant de la coque vers la couche de recouvrement, une proportion en matériau résistant au feu titane/matériau à base de titane de : 25%/75%, 50%/50% et 75%/25%.

Selon un autre mode de réalisation, la pluralité de couches intermédiaires peut comprendre neuf couches, chacune des neuf couches comprend respectivement, en partant de la coque vers la couche de recouvrement, une proportion en matériau résistant au feu titane/matériau à base de titane de : 10%/90%, 20%/80%, 30%/70%, 40%/60%, 50%/50%, 60%/40%, 70%/30%, 80%/20%, 90%/10%.

Selon un autre mode de réalisation, la pluralité de couches intermédiaires peut comprendre dix-neuf couches, chacune des dix-neuf couches comprend respectivement, en partant de la coque vers la couche de recouvrement, une proportion en matériau résistant au feu titane/matériau à base de titane de : 5%/95%, 10%/90%, 15%/85%, 20%/80%, 25%/75%, 30%/70%, 35%/65%, 40%/60%, 45%/55%, 50%/50%, 55%/45%, 60%/40%, 65%/35%, 70%/30%, 75%/25%, 80%/20%, 85%/15%, 90%/10% 95%/5%.

### Brève description des dessins

D'autres buts, avantages et caractéristiques ressortiront de la description qui va suivre, donnée à titre purement illustratif et faite en référence au dessin annexé sur lequel :

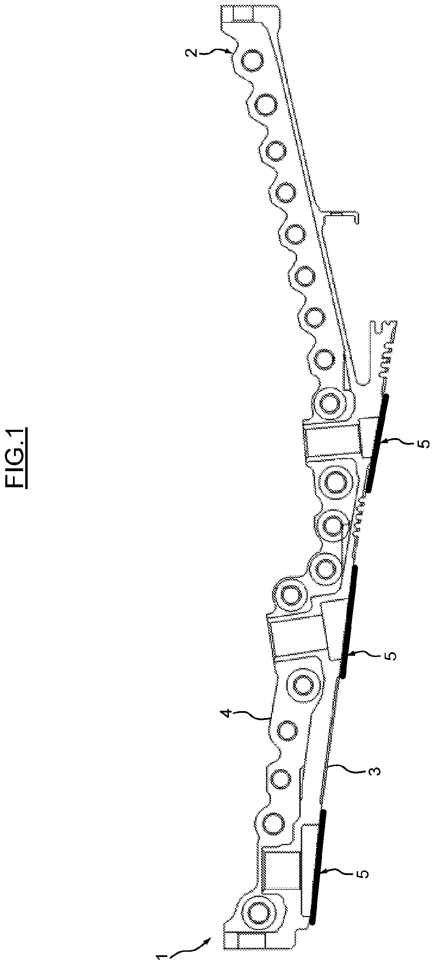

[Fig 1] est une vue de côté d'un carter de compresseur haute pression comportant une coque partiellement recouverte d'une couche de recouvrement obtenue selon un procédé de fabrication conforme à l'invention.

### Exposé détaillé d'au moins un mode de réalisation

Dans ce qui va suivre, les bornes d'un domaine de valeurs sont comprises dans ce domaine, notamment dans l'expression « compris entre ».

La figure 1 illustre un procédé de fabrication d'une pièce 1 en métal selon l'invention.

La pièce 1 en métal peut, par exemple, être une coque de carter d'un compresseur haute pression pour turbomachine.

Tout d'abord, on fournit une coque 2 en titane. Par coque en titane ou matériau à base de titane, on entend un alliage dans lequel le titane est l'élément majoritaire. Les termes « titane », « alliage de titane » ou « matériau à base de titane » désignent à la fois du titane quasi-pur ou un alliage de titane.

Selon un exemple de réalisation, la coque 2 peut être en alliage TA6V, de formule Ti6Al4V.

La coque 2 présente une première surface 3 et une deuxième surface 4 opposée à la première surface 3.

On réalise ensuite par fabrication additive une couche de recouvrement 5 en un matériau résistant au feu titane sur la coque 2 de sorte que ladite couche de recouvrement 5 recouvre partiellement ou entièrement la première surface 3 et/ou la deuxième surface 4.

Bien entendu, on pourra prévoir qu'une pluralité de couches de recouvrement 5 soit réalisées sur la première surface 3 et/ou la deuxième surface 4.

Comme on peut le voir à la figure 1, la coque 1 peut comprendre une pluralité de couches de recouvrement 5 de sorte que la première surface est partiellement recouverte.

Selon l'exemple illustré, la pièce 1 étant une coque de carter de compresseur haute pression correspondant à une succession d'un nombre défini d'aubes fixes et d'aubes mobiles, les couches de recouvrement 5 pourront avantageusement être disposées au moins sur toutes les zones du carter en regard des aubes mobiles.

Selon une alternative, l'intégralité de la surface interne du carter peut être recouverte d'une couche de recouvrement 5.

La couche de recouvrement 5 peut être un acier ou en un alliage.

Selon un mode de réalisation, la couche de recouvrement 5 peut être en Inconel^{®}, de préférence INCO 718, de formule NiCr19Fe19Nb5Mo3.

La méthode de fabrication additive peut avantageusement être choisie parmi les méthodes suivantes : rechargement par dépôt laser dite « Laser Metal Déposition » (LMD) sous forme poudre ou fil, fabrication additive par arc électrique dite « Cold Metal Transfer » (CMT), ou encore projection à froid dite « Cold Spray ».

Les méthodes de fabrication additive précitées permettent d'obtenir une couche de recouvrement 5 uniforme localement et dont l'épaisseur peut être optimisée.

De plus, l'épaisseur de la couche de recouvrement est de préférence comprise entre 1 et 10mm. L'épaisseur peut varier en fonction de la zone de la coque 2 sur laquelle la couche de recouvrement 5 est appliquée.

Après l'étape de fabrication additive, on effectue un traitement thermique de la coque 2 à une température comprise entre 200°C et 1000°C afin de conférer à la couche de recouvrement 5 les propriétés mécaniques nécessaires à la pièce 1 en métal fabriquée pour son utilisation.

De préférence, la température du traitement thermique sera choisie de manière à ne pas dégrader les propriétés de tenue mécanique de la coque 2. Dans l'exemple illustré, la coque 2 est en TA6V, matériau pour lequel la température maximale applicable de traitement thermique est par exemple de 940°C.

Le traitement thermique peut comprendre une étape ou une pluralité d'étapes.

Selon un mode de réalisation, le traitement thermique peut comprendre deux étapes.

Le traitement thermique peut avantageusement comprendre une première étape à une température comprise entre 500°C et 1000°C, de préférence comprise entre 700°C et 1000°C, et de préférence encore comprise entre 930°C et 950°C.

La première étape peut être réalisée pendant une durée comprise entre 10 min et 5h, de préférence comprise entre 30min et 2h, et de préférence encore comprise entre 45 min et 1h30.

De préférence, le traitement thermique comprend une deuxième étape à une température comprise entre 200°C et 900°C, de préférence comprise entre 500°C et 800°C et de préférence encore comprise entre 690°C et 710°C.

La deuxième étape peut être réalisée pendant une durée comprise entre 30 min et 9h, de préférence comprise entre 6h et 9h, de préférence encore comprise 7h30 et 8h30.

La deuxième étape sera préférentiellement mise en oeuvre à une température inférieure à la température de la première étape, et réalisée pendant une durée plus importante que la première étape.

Afin d'améliorer les propriétés d'accroche du rechargement, c'est-à-dire de la couche de recouvrement 5 sur la coque 2, le procédé de fabrication peut en outre comprendre la réalisation d'une couche intermédiaire en un matériau de transition disposée entre la coque 2 en matériau à base de titane et la couche de recouvrement 5.

Le matériau de transition est avantageusement choisi de sorte qu'il s'accroche à la fois sur la coque 2 et à la couche de recouvrement 5 en matériau résistant eu feu titane.

Selon un autre mode de réalisation, les propriétés d'accroche peuvent être améliorées grâce à un gradient de composition. Le procédé de fabrication pourra alors comprendre une étape de réalisation d'une pluralité de couches intermédiaires disposées entre la coque 2 et la couche de recouvrement 5.

Les couches intermédiaires sont formées par un mélange du matériau résistant au feu titane et du matériau à base de titane et le mélange forme un gradient de composition de sorte que la couche intermédiaire disposée directement au contact de la couche de recouvrement 5 est majoritairement formée par le matériau résistant au feu titane. Inversement, la couche intermédiaire disposée directement au contact de la coque 2 en matériau à base de titane est majoritairement formée par le matériau à base titane.

De préférence, le nombre de couches intermédiaires est compris entre quatre et vingt couches, et de préférence encore compris entre dix et quinze couches.

De manière avantageuse, les couches intermédiaires peuvent être au nombre de trois. Chacune des trois couches en matériau à base de titane, peut par exemple comprendre, respectivement en partant de la coque 2 vers la couche de recouvrement 5, c'est-à-dire de la couche la plus interne vers la couche la plus externe, une proportion croissante en matériau résistant au feu titane.

La zone de transition formée par le gradient de composition permet ainsi une accroche progressive du matériau résistant au feu titane.

### Exemples de procédé de fabrication d'une pièce en métal selon l'invention :

### Exemple 1 : rechargement direct

A partir d'une coque 2 de carter 1 d'un compresseur haute pression pour turbomachine est en alliage TA6V, de formule Ti6Al4V, on forme une couche de recouvrement 5 en un matériau résistant au feu titane, l'INCO 718, de formule NiCr19Fe19Nb5Mo3, par fabrication additive.

La couche de recouvrement 5 est réalisée selon la méthode de rechargement par dépôt laser (Laser Metal Deposition en anglais) sous forme de poudre.

La couche de recouvrement 5 est réalisée de sorte qu'elle recouvre partiellement la première surface 3 de la coque 2. De plus, l'épaisseur de la couche de recouvrement 5 est comprise entre 1 et 10mm.

Après l'étape de fabrication additive, on effectue un traitement thermique de la coque 2, en deux étapes.

Une première étape est réalisée à une température de 940°C pendant 1h puis une deuxième étape à une température de 700°C pendant 8h.

Ce traitement thermique est particulièrement avantageux pour conférer des propriétés de tenue mécanique suffisante au TA6V et ainsi maintenir la tenue mécanique du carter. L'épaisseur de la couche de recouvrement ne contribuant que très peu à la tenue mécanique du carter, la dégradation partielle des propriétés mécaniques de l'INCO 718 est acceptable.

### Exemple 2 : rechargement avec matériau de transition

A partir d'une coque 2 de carter 1 d'un compresseur haute pression pour turbomachine, en alliage TA6V, on forme une couche intermédiaire en un matériau de transition, par fabrication additive.

La couche intermédiaire est réalisée par la méthode de rechargement par dépôt laser sous forme de poudre. La couche intermédiaire est disposée sur la coque 2 de sorte que le matériau de transition recouvre partiellement la première surface 3 de la coque 2.

On réalise ensuite par la méthode de rechargement par dépôt laser sous forme de poudre une couche de recouvrement 5 en INCO 718, de sorte que la couche de recouvrement 5 recouvre le matériau de transition. L'épaisseur de la couche de recouvrement 5 est comprise entre 1 et 10mm.

Après l'étape de fabrication additive, on effectue un traitement thermique identique à l'exemple 1.

### Exemple 3 : rechargement avec gradient de composition

Comme cela est décrit à l'exemple 1, on fournit une coque 2 de carter 1 d'un compresseur haute pression pour turbomachine en alliage TA6V, de formule Ti6Al4V.

On forme ensuite un gradient de composition incluant trois couches intermédiaires de sorte qu'elles recouvrent partiellement la première surface 3 de la coque 2.

Les trois couches comprennent en partant de la coque 2 TA6V vers la couche de recouvrement 5 en INCO 718, une proportion croissante en matériau INCO 718. Dans cet exemple, les proportions INCO 718/TA6V en partant de la coque 2 TA6V vers la couche de recouvrement 5 en INCO 718 sont de : 30%/70%, 50%/50% et 70%/30%.

On réalise ensuite, par la méthode de rechargement par dépôt laser sous forme de poudre, la couche de recouvrement 5 en un matériau résistant au feu titane, l'INCO 718, de formule NiCr19Fe19Nb5Mo3, sur les couches intermédiaires. L'épaisseur de la couche de recouvrement 5 est comprise entre 1 et 10mm.

Après l'étape de fabrication additive, on effectue un traitement thermique identique à l'exemple 1.

### Exemple 4 : rechargement avec gradient de composition

Comme cela est décrit à l'exemple 1, on fournit une coque 2 de carter 1 d'un compresseur haute pression pour turbomachine en alliage TA6V, de formule Ti6Al4V.

On forme ensuite un gradient de composition incluant neuf couches intermédiaires de sorte qu'elles recouvrent partiellement la première surface 3 de la coque 2.

Les neuf couches comprennent en partant de la coque 2 TA6V vers la couche de recouvrement 5 en INCO 718, une proportion croissante en matériau INCO 718. Dans cet exemple, les proportions INCO 718/TA6V en partant de la coque 2 TA6V vers la couche de recouvrement 5 en INCO 718 sont de : 10%/90%, 20%/80%, 30%/70%, 40%/60%, 50%/50%, 60%/40%, 70%/30%, 80%/20%, 90%/10%.

On réalise ensuite, par la méthode de rechargement par dépôt laser sous forme de poudre, la couche de recouvrement 5 en un matériau résistant au feu titane, l'INCO 718, de formule NiCr19Fe19Nb5Mo3, sur les couches intermédiaires. L'épaisseur de la couche de recouvrement 5 est comprise entre 1 et 10mm.

Après l'étape de fabrication additive, on effectue un traitement thermique identique à l'exemple 1.

### Exemple 5 : rechargement avec gradient de composition

Comme cela est décrit à l'exemple 1, on fournit une coque 2 de carter 1 d'un compresseur haute pression pour turbomachine en alliage TA6V, de formule Ti6Al4V.

On forme ensuite un gradient de composition incluant dix-neuf couches intermédiaires de sorte qu'elles recouvrent partiellement la première surface 3 de la coque 2.

Les dix-neuf couches comprennent en partant de la coque 2 TA6V vers la couche de recouvrement 5 en INCO 718, une proportion croissante en matériau INCO 718. Dans cet exemple, les proportions INCO 718/TA6V en partant de la coque 2 TA6V vers la couche de recouvrement 5 en INCO 718 sont de : 5%/95%, 10%/90%, 15%/85%, 20%/80%, 25%/75%, 30%/70%, 35%/65%, 40%/60%, 45%/55%, 50%/50%, 55%/45%, 60%/40%, 65%/35%, 70%/30%, 75%/25%, 80%/20%, 85%/15%, 90%/10% 95%/5%.On réalise ensuite, par la méthode de rechargement par dépôt laser sous forme de poudre, la couche de recouvrement 5 en un matériau résistant au feu titane, l'INCO 718, de formule NiCr19Fe19Nb5Mo3, sur les couches intermédiaires. L'épaisseur de la couche de recouvrement 5 est comprise entre 1 et 10mm.

Après l'étape de fabrication additive, on effectue un traitement thermique identique à l'exemple 1.

### Exemple 6 : rechargement avec gradient de composition

Comme cela est décrit à l'exemple 1, on fournit une coque 2 de carter 1 d'un compresseur haute pression pour turbomachine en alliage TA6V, de formule Ti6Al4V.

On forme ensuite un gradient de composition incluant trois couches intermédiaires de sorte qu'elles recouvrent partiellement la première surface 3 de la coque 2.

Les trois couches comprennent en partant de la coque 2 TA6V vers la couche de recouvrement 5 en INCO 718, une proportion croissante en matériau INCO 718. Dans cet exemple, les proportions INCO 718/TA6V en partant de la coque 2 TA6V vers la couche de recouvrement 5 en INCO 718 sont de : 25%/75%, 50%/50%, 75%/25%.

On réalise ensuite, par la méthode de rechargement par dépôt laser sous forme de poudre, la couche de recouvrement 5 en un matériau résistant au feu titane, l'INCO 718, de formule NiCr19Fe19Nb5Mo3, sur les couches intermédiaires. L'épaisseur de la couche de recouvrement 5 est comprise entre 1 et 10mm.

Après l'étape de fabrication additive, on effectue un traitement thermique identique à l'exemple 1.

## Revendications

1. Procédé de fabrication d'une pièce en métal (1), **caractérisé en ce qu'**il comporte les étapes suivantes :
on fournit une coque (2) en un matériau à base de titane, la coque (2) présentant une première surface (3) et une deuxième surface (4) opposée à la première surface (3) ;
on réalise par fabrication additive une couche de recouvrement (5) en un matériau résistant au feu titane sur la coque (2) de sorte que ladite couche de recouvrement (5) recouvre au moins partiellement la première surface (3) et/ou la deuxième surface (4) ; et
après l'étape de fabrication additive, on effectue un traitement thermique de la pièce en métal (1) à une température comprise entre 200°C et 1000°C ;
**en ce qu'**il comprend la réalisation d'une pluralité de couches intermédiaires disposées entre la coque et la couche de recouvrement, la pluralité de couches intermédiaires étant formées par un mélange du matériau résistant au feu titane et du matériau à base de titane, ledit mélange formant un gradient de composition de sorte que la couche intermédiaire disposée directement au contact de la couche de recouvrement en matériau résistant au feu titane est majoritairement formée par le matériau résistant au feu titane et inversement, la couche intermédiaire disposée directement au contact de la coque en matériau à base de titane étant majoritairement formée par le matériau à base de titane.

2. Procédé de fabrication selon la revendication 1, **caractérisé en ce que** ladite couche de recouvrement (5) est en un matériau de formule NiCr19Fe19Nb5Mo3 et/ou la coque (2) est en un matériau de formule Ti6Al4V.

3. Procédé de fabrication selon la revendication 1 ou 2, **caractérisé en ce que** le traitement thermique comprend une pluralité d'étapes.

4. Procédé de fabrication selon l'une quelconque des revendications précédentes, **caractérisé en ce que** le traitement thermique comprend une première étape à une température comprise entre 500°C et 1000°C, de préférence comprise entre 700°C et 1000°C, de préférence encore comprise entre 930°C et 950°C.

5. Procédé de fabrication selon la revendication 4, **caractérisé en ce que** la première étape est réalisée pendant une durée comprise entre 10min et 5h, de préférence comprise entre 30min et 2h, de préférence encore comprise entre 45 min et 1h30.

6. Procédé de fabrication selon l'une quelconque des revendications 4 ou 5, **caractérisé en ce que** le traitement thermique comprend une deuxième étape à une température comprise entre 200°C et 900°C, de préférence comprise entre 500°C et 800°C et de préférence encore comprise entre 690°C et 710°C.

7. Procédé de fabrication selon la revendication 6, **caractérisé en ce que** la deuxième étape est réalisée pendant une durée comprise entre 30 min et 9h, de préférence comprise entre 6h et 9h, de préférence encore comprise 7h30 et 8h30.

8. Procédé de fabrication selon l'une quelconque des revendications précédentes, **caractérisé en ce que** l'épaisseur de la couche de recouvrement (5) est comprise entre 1 et 10mm.

9. Procédé de fabrication selon l'une quelconque des revendications précédentes, **caractérisé en ce que** la fabrication additive est choisie parmi les méthodes suivantes : rechargement par dépôt laser dite Laser Metal Deposition (LMD) sous forme poudre ou fil, fabrication additive par arc électrique dite Cold Metal Transfer (CMT), ou projection à froid dite Cold Spray.

10. Procédé de fabrication selon l'une quelconque des revendications précédentes, **caractérisé en ce qu'**il comprend la réalisation d'une couche intermédiaire en un matériau de transition disposée entre la coque et la couche de recouvrement.

11. Procédé de fabrication selon la revendication 1, **caractérisé en ce que** le nombre de la pluralité de couches intermédiaires est compris entre 4 et 20 couches, de préférence compris entre 10 et 15 couches.

12. Procédé de fabrication selon la revendication 1, **caractérisé en ce que** la pluralité de couches intermédiaires comprend trois couches, les trois couches comprenant, en partant de la coque vers la couche de recouvrement, une proportion croissante en matériau résistant au feu titane.

13. Procédé de fabrication selon l'une quelconque des revendications précédentes, **caractérisé en ce que** la coque en un matériau à base de titane fournie est une coque de carter d'un compresseur haute pression pour turbomachine.

## Patentansprüche

1. Verfahren zur Fertigung eines Metallteils (1), **dadurch gekennzeichnet, dass** es die folgenden Schritte umfasst:
Bereitstellen einer Schale (2) aus einem Material auf Titanbasis, wobei die Schale (2) eine erste Fläche (3) und eine der ersten Fläche (3) gegenüberliegende zweite Fläche (4) aufweist;
Herstellen einer Deckschicht (5) aus einem feuerfesten Titanmaterial auf der Schale (2) durch generative Fertigung so, dass die Deckschicht (5) die erste Fläche (3) und/oder die zweite Fläche (4) mindestens teilweise bedeckt; und
nach dem Schritt der generativen Fertigung, Durchführen einer Wärmebehandlung des Metallteils (1) bei einer Temperatur im Bereich zwischen 200 °C und 1000 °C;
dadurch, dass es das Herstellen einer Vielzahl von Zwischenschichten umfasst, die zwischen der Schale und der Deckschicht angeordnet werden, wobei die Vielzahl von Zwischenschichten aus einer Mischung des feuerfesten Titanmaterials und des Materials auf Titanbasis gebildet werden, wobei die Mischung einen Zusammensetzungsgradienten bildet, sodass die Zwischenschicht, die direkt in Kontakt mit der Deckschicht aus feuerfestem Titanmaterial angeordnet ist, größtenteils aus dem feuerfesten Titanmaterial gebildet ist, und umgekehrt, die Zwischenschicht, die direkt in Kontakt mit der Schale aus Material auf Titanbasis angeordnet ist, größtenteils aus dem Material auf Titanbasis gebildet ist.

2. Fertigungsverfahren nach Anspruch 1, **dadurch gekennzeichnet, dass** die Deckschicht (5) aus einem Material der Formel NiCr19Fe19Nb5Mo3 ist und/oder die Schale (2) aus einem Material der Formel Ti6A14V ist.

3. Fertigungsverfahren nach Anspruch 1 oder 2, **dadurch gekennzeichnet, dass** die Wärmebehandlung eine Vielzahl von Schritten umfasst.

4. Fertigungsverfahren nach einem der vorstehenden Ansprüche, **dadurch gekennzeichnet, dass** die Wärmebehandlung einen ersten Schritt bei einer Temperatur im Bereich zwischen 500 °C und 1000 °C, bevorzugt im Bereich zwischen 700 °C und 1000 °C, noch bevorzugter im Bereich zwischen 930 °C und 950 °C umfasst.

5. Fertigungsverfahren nach Anspruch 4, **dadurch gekennzeichnet, dass** der erste Schritt während einer Dauer im Bereich zwischen 10 min und 5 h, bevorzugt im Bereich zwischen 30 min und 2 h, noch bevorzugter im Bereich zwischen 45 min und 1 h 30 durchgeführt wird.

6. Fertigungsverfahren nach einem der Ansprüche 4 oder 5, **dadurch gekennzeichnet, dass** die Wärmebehandlung einen zweiten Schritt bei einer Temperatur im Bereich zwischen 200 °C und 900 °C, bevorzugt im Bereich zwischen 500 °C und 800 °C, und noch bevorzugter im Bereich zwischen 690 °C und 710 °C umfasst.

7. Fertigungsverfahren nach Anspruch 6, **dadurch gekennzeichnet, dass** der zweite Schritt während einer Dauer im Bereich zwischen 30 min und 9 h, bevorzugt im Bereich zwischen 6 h und 9 h, noch bevorzugter im Bereich zwischen 7 h 30 und 8 h 30 durchgeführt wird.

8. Fertigungsverfahren nach einem der vorstehenden Ansprüche, **dadurch gekennzeichnet, dass** die Dicke der Deckschicht (5) im Bereich zwischen 1 und 10 mm liegt.

9. Fertigungsverfahren nach einem der vorstehenden Ansprüche, **dadurch gekennzeichnet, dass** die generative Fertigung aus den folgenden Verfahren ausgewählt ist: Laserauftragschweißen, Laser Metal Deposition (LMD) genannt, in Pulver- oder Drahtform, generative Fertigung durch Lichtbogen, Gold Metal Transfer (CMT) genannt, oder Kaltgasspritzen, Gold Spray genannt.

10. Fertigungsverfahren nach einem der vorstehenden Ansprüche, **dadurch gekennzeichnet, dass** es das Herstellen einer Zwischenschicht aus einem Übergangsmaterial umfasst, die zwischen der Schale und der Deckschicht angeordnet wird.

11. Fertigungsverfahren nach Anspruch 1, **dadurch gekennzeichnet, dass** die Anzahl der Vielzahl von Zwischenschichten im Bereich zwischen 4 und 20 Schichten, bevorzugt im Bereich zwischen 10 und 15 Schichten, liegt.

12. Fertigungsverfahren nach Anspruch 1, **dadurch gekennzeichnet, dass** die Vielzahl von Zwischenschichten drei Schichten umfasst, wobei die drei Schichten, ausgehend von der Schale zur Deckschicht hin, einen zunehmenden Anteil an feuerfestem Titanmaterial umfassen.

13. Fertigungsverfahren nach einem der vorstehenden Ansprüche, **dadurch gekennzeichnet, dass** die bereitgestellte Schale aus einem Material auf Titanbasis eine Gehäuseschale eines Hochdruckverdichters für ein Turbotriebwerk ist.

## Claims

1. A method for manufacturing a metal component (1), **characterised in that** it includes the following steps:
a shell (2) of a titanium-based material is provided, the shell (2) having a first surface (3) and a second surface (4) opposite the first surface (3);
a covering layer (5) made of a titanium fire-resistant material is produced by additive manufacturing on the shell (2) such that said covering layer (5) at least partially covers the first surface (3) and/or the second surface (4); and
after the additive manufacturing step, the metal component (1) is heat treated at a temperature of between 200°C and 1000°C;
**in that** it comprises the production of a plurality of intermediate layers disposed between the shell and the covering layer, the plurality of intermediate layers being formed of a mixture of the titanium fire-resistant material and the titanium-based material, said mixture forming a composition gradient such that the intermediate layer disposed directly in contact with the covering layer made of a titanium fire-resistant material is mainly formed of the titanium fire-resistant material and conversely, the intermediate layer disposed directly in contact with the shell made of a titanium-based material being mainly formed of the titanium-based material.

2. The manufacturing method according to claim 1, **characterised in that** said covering layer (5) is made of a material of formula NiCr19Fe19Nb5Mo3 and/or the shell (2) is made of a material of formula Ti6Al4V.

3. The manufacturing method according to claim 1 or 2, **characterised in that** the heat treatment comprises a plurality of steps.

4. The manufacturing method according to any one of the preceding claims, **characterised in that** the heat treatment comprises a first step at a temperature of between 500°C and 1000°C, preferably of between 700°C and 1000°C, more preferably of between 930°C and 950°C.

5. The manufacturing method according to claim 4, **characterised in that** the first step is carried out for a duration of between 10 min and 5 h, preferably of between 30 min and 2 h, more preferably of between 45 min and 1 h 30.

6. The manufacturing method according to any one of claims 4 or 5, **characterised in that** the heat treatment comprises a second step at a temperature of between 200°C and 900°C, preferably of between 500°C and 800°C and more preferably of between 690°C and 710°C.

7. The manufacturing method according to claim 6, **characterised in that** the second step is carried out for a duration of between 30 min and 9 h, preferably of between 6 h and 9 h, more preferably of between 7 h 30 and 8 h 30.

8. The manufacturing method according to any one of the preceding claims, **characterised in that** the thickness of the covering layer (5) is of between 1 and 10mm.

9. The manufacturing method according to any one of the preceding claims, **characterised in that** the additive manufacturing is selected from the following methods: surfacing by laser deposition called Laser Metal Deposition (LMD) in powder or wire form, additive manufacturing by electric arc called Cold Metal Transfer (CMT), or Cold Spray.

10. The manufacturing method according to any one of the preceding claims, **characterised in that** it comprises the production of an intermediate layer made of a transition material disposed between the shell and the covering layer.

11. The manufacturing method according to claim 1, **characterised in that** the number of the plurality of intermediate layers is comprised between 4 and 20 layers, preferably comprised between 10 and 15 layers.

12. The manufacturing method according to claim 1, **characterised in that** the plurality of intermediate layers comprises three layers, the three layers comprising, starting from the shell towards the covering layer, an increasing proportion of titanium fire-resistant material.

13. The manufacturing method according to any one of the preceding claims, **characterised in that** the shell made of a titanium-based material provided is a casing shell of a high-pressure compressor for a turbomachine.
